# EUROPÄISCHE PATENTSCHRIFT

(11) **EP 1 074 129 B1**
(45) Veröffentlichungstag und Bekanntmachung des Hinweises auf die Patenterteilung: **17.08.2005**
(21) Anmeldenummer: 99926243.9
(22) Anmeldetag: 15.04.1999
(51) Int. Cl.: H04L 25/03, H04B 1/707

(54) **VORVERZERRUNG ZUR VERRINGERUNG VON INTERSYMBOLINTERFERENZ SOWIE MEHRFACHZUGRIFFSINTERFERENZ**
PRE-EQUALIZATION FOR REDUCING INTERSYMBOL INTERFERENCE AND MULTIPLE ACCESS INTERFERENCE
PREEGALISATION POUR LA REDUCTION DE L'INTERFERENCE INTERSYMBOLES ET DE L'INTERFERENCE D'ACCES MULTIPLES

(30) Priorität: 24.04.1998 DE 19818215
(43) Veröffentlichungstag der Anmeldung: 07.02.2001
(73) Patentinhaber: ROBERT BOSCH GMBH, 70442 Stuttgart (DE)
(72) Erfinder: KOWALEWSKI, Frank, D-38228 Salzgitter (DE)
(86) Internationale Anmeldenummer: PCT/DE1999/001121
(87) Internationale Veröffentlichungsnummer: WO 1999/056441

(56) Entgegenhaltungen:
- DE-C- 19 616 829
- KLEIN: "Zero forcing and minimum mean-square-error equalization fo rmultiuser detection in code-division multiple-access channels" IEEE TRANSACTIONS ON VEHICULAR TECHNOLOGY., Bd. 45, Nr. 2, Mai 1996 (1996-05), Seiten 276-287, XP000598095 NEW YORK, US ISSN: 0018-9545
- RAPAJIC, VUCETIC: "Linear adaptive transmitter-receiver structures for asynchronous CDMA systems" EUROPEAN TRANSACTIONS ON TELECOMMUNICATIONS AND RELATED TECHNOLOGIES., Bd. 6, Nr. 1, Januar 1995 (1995-01), Seiten 21-27, XP000502746 MILAN, IT ISSN: 1120-3862
- XIAODONG WANG, POOR: "Blind equalization and multiuser detection in dispersive CDMA channels" IEEE TRANSACTIONS ON COMMUNICATIONS, Bd. 46, Nr. 1, Januar 1998 (1998-01), Seiten 91-103, XP002112839 NEW YORK, US ISSN: 0090-6778

## Beschreibung

### Stand der Technik

Die Erfindung geht aus von einem Verfahren bzw. einer Vorrichtung nach der Gattung der unabhängigen Patentansprüche. Aus einem Artikel von A. Klein, G.K. Kaleh und P.W. Baier: "Zero Forcing and Minimum Mean-Square-Error Equalization for Multiuser Detection in Code-Division Multiple-Access Channels", IEEE Trans. Vehic. Tech., Bd. 45 (1996), 276-287 sind bereits Verfahren bekannt, die sogenannte Inter-Symbol-Interferenzen (ISI) zwischen Datensymbolen eines Nutzers und Multiple-Access-Interferenzen (MAI), d.h. Störungen durch andere Nutzer, in einem Empfänger von Funkdaten berücksichtigen. Es werden somit alle Störungen der Übertragung beim Empfänger berücksichtigt. Bei der Verwendung derartiger Verfahren in Mobiltelefonsysteme bzw. Mobilfunksysteme werden die einzelnen mobilen Stationen sehr aufwendig, da dieses Verfahren hohe technische Anforderungen an den Empfänger stellt.

Des weiteren offenbart der Artikel von RAPAJIC, VUCETIC "Linear adaptive transmitterreceiver structures for asynchronous CDMA systems" EUROPEAN TRANSACTIONS ON TELECOMMUNICATIONS AND RELATED TECHNOLOGIES., Bd. 6, Nr. 1, Januar 1995 (1995-01), Seiten 21-27, ein CDMA System, bei dem eine Vorentzerrung im Sender durch die Anpassung der Signatur des jeweiligen Benutzers an die Parameter des von ihm verwendeten Kanals erfolgt.

### Vorteile der Erfindung

Das erfindungsgemäße Verfahren bzw. die erfindungsgemäße Vorrichtung hat demgegenüber den Vorteil, daß alle Störungen, die durch die Funkübertragung auftreten können, beim Sender berücksichtigt werden. Die Empfänger der Daten können daher besonders einfach ausgelegt werden.

Besonders vorteilhaft ist dies für die Übertragung von Daten von einer Basisstation zu einer Mehrzahl von Mobilstationen. Für die Rückübertragung kann dann ein Verfahren oder eine Vorrichtung benutzt werden, welche alle Störungen auf der Seite des Empfängers berücksichtigt, so daß die einzelnen Mobilstationen eines Mobiltelefonsystems besonders einfach ausgelegt werden können. Das erfindungsgemäße Verfahren bzw. die erfindungsgemäße Vorrichtung kann aber auch zur Datenübertragung von Mobilstationen zu Basisstationen verwendet werden. Besonders einfach erfolgt die Messung der Übertragungsqualität bzw. der Kanalimpulsantwort in der Basisstation, und kann gegebenenfalls von dort aus verteilt werden.

### Zeichnungen

Ausführungsbeispiele der Erfindung sind in der nachfolgenden Beschreibung näher erläutert. Es zeigen die Fig. 1 den allgemeinen Aufbau eines Mobilfunksystems bzw. eines Mobiltelefonsystems, Fig. 2 ein herkömmliches System nach dem Stand der Technik, Fig. 3 die erfindungsgemäße Datenübertragung von einer Basisstation zu einer Mobilstation und Fig. 4 die erfindungsgemäße Datenübertragung von einer Mobilstation zu einer Baisstation.

### Beschreibung

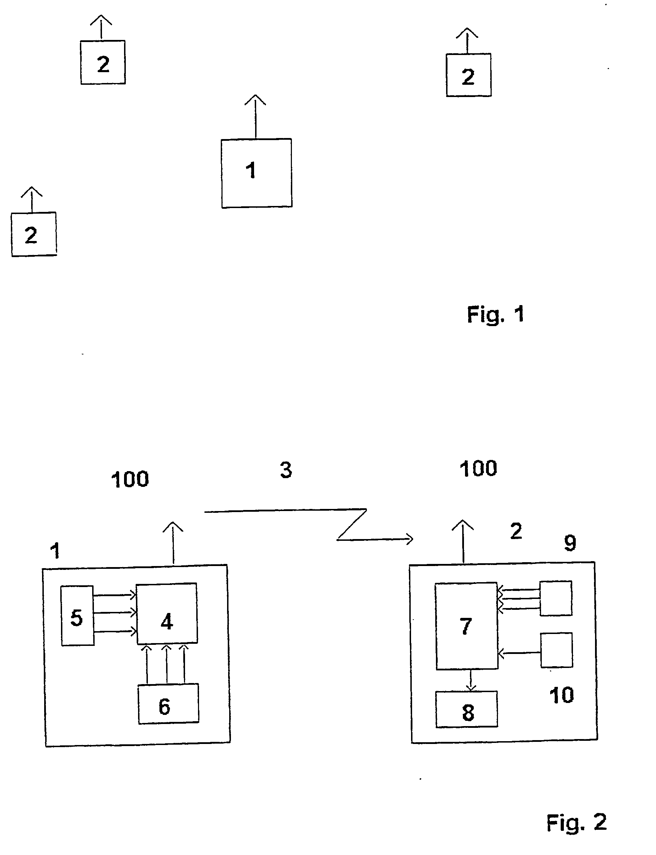

In der Figur 1 wird schematisch eine Funkzelle eines zellularen Mobiltelefonsystems bzw. Mobilfunksystems mit einer Basisstation 1 und mehreren Mobilstationen 2 dargestellt. Wesentlich an diesem System ist, daß ein Austausch von Daten immer nur zwischen der Basisstation 1 und den Mobilstationen 2 erfolgt und kein direkter Datenaustausch zwischen den Mobilstationen 2 möglich ist. Entsprechend wird die Basisstation 1 auch als Zentralstation und die Mobilstationen 2 als Peripheriestationen bezeichnet. Der Austausch von Daten zwischen der Basisstation 1 und der Mobilstation 2 erfolgt durch Funkübertragung. Die Funkübertragung von der Basisstation 1 zu einer Mobilstation 2 wird dabei als Downlink und die Datenübertragung von einer Mobilstation 2 zur Basisstation 1 als Uplink bezeichnet. Bei einem derartigen, in der Figur 1 dargestellten System, mit einer Zentral- oder Basisstation 1 und mehreren Peripherie-oder Mobilstationen 2 ist festzulegen wie die Daten für die verschiedenen Mobilstationen modulierte werden, damit sie in den Empfängern der verschiedenen Mobilstationen getrennt detektiert werden können. Bei dem System nach der Figur 1 handelt es sich um ein sogenanntes CDMA-System (Code division multiple access), bei dem für die Datenübertragung ein gemeinsames Frequenzband zur Verfügung steht, wobei sich die einzelnen Datenkanäle zwischen der Basisstation 1 und den jeweiligen Mobilstationen 2 hinsichtlich eines Codes unterscheiden, mit dem das Signal für die entsprechende Mobilstation 2 gespreizt wird. Durch diese Spreizung mit dem Code wird jedes Signal das zwischen der Basisstation 1 und einer bestimmten Mobilstation 2 ausgetauscht werden soll, über das gesamte zur Verfügung stehende Spektrum verteilt. Jedes einzelne zu übertragende Informationsbit wird dabei in eine Vielzahl kleiner "Chips" zerlegt. Dadurch wird die Energie eines Bitsüber das gesamte Frequenzspektrum verteilt, welches dem CDMA-System zur Verfügung steht.

In der Figur 2 werden herkömmliche Systeme anhand einer Downlink-Übertragung näher erläutert. Die Figur 2 zeigt eine Basisstation 1 und eine Mobilstation 2, die jeweils eine Antenne 100 aufweisen. Die beiden Stationen tauschen hier durch einen Downlink-Funkkanal 3 Daten aus. Die Basisstation 1 weist einen Modulator 4 auf, der die Datenströme von Datenquellen 6 für die Übertragung über den Funkkanal 3 aufbereitet. Dazu benötigt der Modulator 4 noch Codeinformationen, die von einem Codegenerator 5 zur Verfügung gestellt werden. Exemplarisch werden in der Figur 2 drei Pfeile von den Datenquellen 6 zum Modulator 4 und drei Pfeile vom Codegenerator 5 zum Modulator 4 gezeigt, die drei unterschiedliche Datenströme bzw. drei unterschiedliche Codeinformationen repräsentieren. Im realen System wird eine wesentlich größere Anzahl von Datenströmen und Codeinformationen gleichzeitig verarbeitet.

Der Modulator 4 erzeugt aus den Datenströmen und den Codeinformationen ein Sendesignal, welches allen Mobilstationen 2 zugesendet wird. In der Figur 2 wird exemplarisch nur eine empfangende Mobilstation 2 dargestellt. Bei einer einzigen Mobilstation 2 mit einem einzigen Datenstrom würde in der Basisstation 1 eine Codeinformation benötigt. Die Basisstation 1 sendet jedoch in der Regel gleichzeitig über mehrere Funkkanäle 3 zu mehreren Mobilstationen 2, deren jeweiligen Daten mit verschiedenen Codes moduliert sind. Die weiteren Mobilstationen 2 werden aus Vereinfachungsgründen in der Figur 2 nicht dargestellt.

Bei der Übertragung über der. Funkkanal 3 treten nun eine Vielzahl von Störungen auf. Eine erste Störung wird dabei als ISI (Intersymbolinterferenz) bezeichnet und resultiert daher, daß ein ausgesandtes Funksignal über mehrere verschiedene Pfade zum Empfänger gelangen kann, wobei sich die Ankunftszeiten beim Empfänger geringfügig unterscheiden. Es handelt sich somit um eine Störung, die in dem betreffenden Funkkanal dadurch entsteht, daß zeitlich vorhergehend ausgesandte Signale aktuell empfangene Signale stören (daher: Inter-Symbol-Interferenz). Eine weitere Störung erfolgt dadurch, daß mehrere Datenströme gleichzeitig übertragen werden, die sich nur hinsichtlich des Codes unterscheiden. Diese Störung tritt auf, wenn die Basisstation 1 mit mehreren Mobilstationen 2 gleichzeitig in Funkkontakt steht, was bei modernen Mobiltelefonsystemen den Regelfall darstellt. Es handelt sich somit um eine Störung, die von den Signalen unterschiedlicher Benutzer ausgeht und die daher auch als MAI (multiple access interference) bezeichnet wird.

Die Fig. 2 zeigt den Empfangsteil einer Mobilstation 2 die zum Empfang von Downlinkdaten über den Funkkanal 3 bestimmt ist. Dafür ist ein Demodulator 7 vorgesehen, der die über die Antenne 100 empfangenen Funksignale verarbeitet. Der Demodulator 7 verarbeitet die empfangenen Signale, um daraus einen Datenstrom für einen Datennutzer 8 zu erzeugen. Wenn die übertragenen Daten z.B. Sprachinformationen darstellen handelt es sich bei dem Nutzer 8 um einen Sprachdecoder, bei anderen Daten beispielsweise um einen Rechner oder Fax-Gerät. In der Regel weisen Mobilstationen nur einen einzigen Datennutzer 8 und somit auch nur einen einzigen Datenstrom auf. Bei völlig ungestörter Übertragung über den Funkkanal 3 bräuchte der Demodulator 7 zur Demodulation nur die Codeinformation der zu dedektierenden Daten für den Nutzer 8 zu kennen. Aufgrund der oben beschriebenen Störungen ist dies jedoch nicht ausreichend. Um ISI zu berücksichtigen ist ein Kanalschätzer 10 erforderlich, der Informationen über die Übertragungseigenschaften d.h. die Kanalimpulsantwort des Funkkanals 3 für die betreffende Mobilstation 2 zur Verfügung stellt. Zur Kompensation vom MAI müssen der Mobilstation 2 außerdem sämtliche in der Basisstation verwendeten Codes bekannt sein. Dafür ist ein Codegenerator 9 vorgesehen, der neben der Codeinformation der hier zu detektierenden Daten, Codeinformationen über alle im System genutzten Codes zur Verfügung stellt. Dieses Verfahren wird auch als "joint detection" bezeichnet. Die Mobilstationen, die auf diese weise zum Empfang von Daten von der Basisstation 1 ausgelegt sind, sind relativ aufwendig.

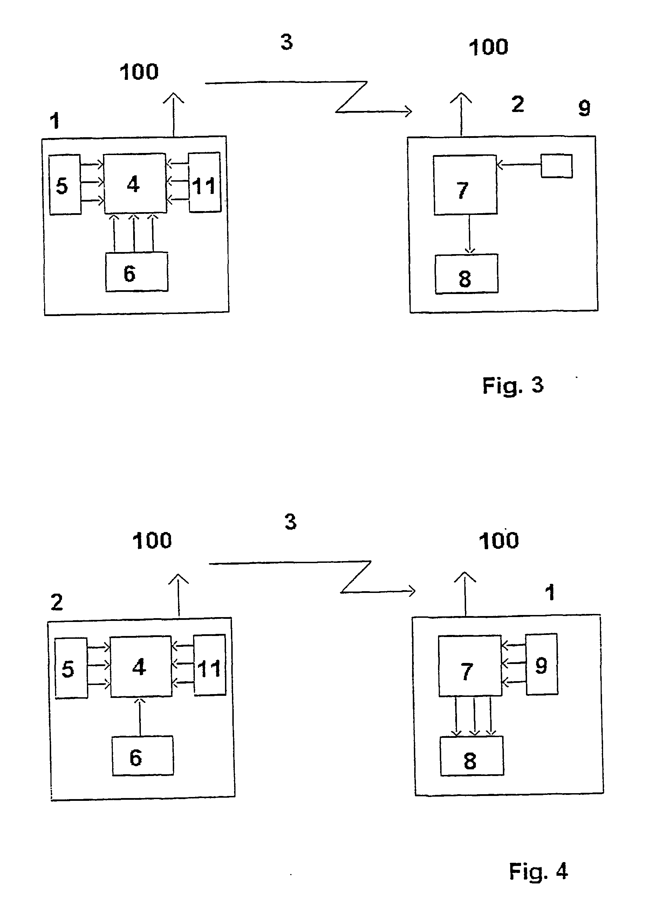

Das erfindungsgemäße Verfahren, bzw. die erfindungsgemäße Vorrichtung wird nun anhand der Figur 3 näher erläutert, in der ebenfalls die Downlinkübertragung von einer Basisstation 1 zu einer Mobilstation 2 gezeigt wird. In der Fig. 3 weist die Basisstation 1 ebenfalls einen Modulator 4 auf, der die Sendesignale für eine Antenne 100 der Basisstation 1 erzeugt. Der Modulator 4 erhält mehrere Datenströme aus Datenquellen 6 die mit Codeinformationen eines Codegenerators 5 gespreizt werden. Zusätzlich ist noch ein Kanalschätzer 11 vorgesehen, der Informationen über die Übertragungseigenschaften aller Funkkanäle 3 zur Verfügung stellt. Der Modulator 4 erzeugt hier ein Sendesignal welches sowohl die ISI als auch die MAI berücksichtigt. Dabei ist das Sendesignal jeweils so ausgelegt, daß jede der Mobilstationen 2 beim Empfang (soweit dies möglich ist) ein störungsfreies Signal erhält. Dabei werden sowohl die Störungen, die durch die gleichzeitige Verwendung mehrerer Codes entstehen, als auch die Störungen, die durch die Übertragungseigenschaften der einzelnen Funkkanäle entstehen, berücksichtigt. Entsprechend einfach ist dann in der Fig. 3 der Empfänger der Daten, die Mobilstation 2 aufgebaut. Diese weist einen Demodulator 7 auf, der das Signal der Antenne 100 erhält. Diesem Demodulator 7 muß nur noch die Codeinformation für den betreffenden Datenstrom von einem Codegenerator 9 zur Verfügung gestellt werden, woraus dann der Demodulator 7 den Datenstrom für den Datennutzer 8 erzeugt. Die Mobilstationen sind hier somit besonders einfach aufgebaut.

In der Fig. 3 wurde dargestellt, daß bei der Downlinkübertragung vorteilhafterweise alle Störungen des Funkkanals in der sendenden Station, bei Downlinkübertragung also in der Basisstation, berücksichtigt werden. Der Downlinkteil der Mobilstation 2 kann daher besonders einfach aufgebaut sein. Um die Mobilstationen 2 auch für den Uplinkpfad, das heißt für das Senden von Daten von der Mobilstation 2 zur Basistation 1 einfach zu halten, könnte für diese Übertragung das Verfahren, entsprechend zur Figur 2, verwendet werden, bei der die Berücksichtigung der ISI und MAI in der empfangenden Station, das heißt wieder in der Basistation erfolgt. Es wird so ein System möglich, bei dem die Mobilstationen besonders einfach aufgebaut sind, da die Berücksichtigung von ISI und MAI ausschließlich in der Basisstation erfolgt. In einem entsprechenden TDD-System ist es auch sehr einfach möglich die Kanalübertragungseigenschaften durch den Kanalschätzer 11 in der Basisstation 1 zu erhalten, indem die Eigenschaften der jeweiligen Übertragungskanäle durch Auswertung der empfangenen Uplink-Daten in der Basisstation ermittelt werden können. Weiterhin kann die Kanalimpulsantwort bzw. Kanalqualität auch durch ein Datentelegramm von der Mobilstation an die Basisstation übermittelt werden.

Das erfindungsgemäße Verfahren kann auch zur Sendung von Daten von der Mobilstation 2 hin zur Basisstation 1 verwendet werden. Dies wird in der Fig. 4 dargestellt. Die Mobilstation 2 ist hier im Uplink, d.h. mit dem Modulator 4, der einen Datenstrom einer Datenquelle 6 aufbereitet, dargestellt. Um die Übertragungseigenschaften aller im System verwendeten Funkkanäle 3 und Codes zu berücksichtigen, ist ein Codegenerator 5 vorgesehen, der die Codeinformationen aller im System verwendeten Codes dem Demodulator 4 übergibt und ein Kanalschätzer 11 der die Übertragungseigenschaften aller Funkkanäle liefert. Die Informationen über die Übertragungseigenschaften aller Kanäle könnten der Mobilstation 2 durch die Basisstation 1 zur Verfügung gestellt werden. Im Modulator 4 werden die Störungen durch Mehrwegeübertragung des Funkkanals 3 und durcg gleichzeitige Übertragung mehrerer Datenströme bei der Generierung des Funksignals berücksichtigt. Das Funksignal wird über die Antenne 100 und die Funkstrecke 3 an die Basisstation 1 gesendet. Die Basisstation 1 empfängt nicht nur die Daten, der in der Fig. 4 gezeigten Mobilstation 2, sondern gleichzeitig auch noch die Funksignale anderer in der Fig. 4 nicht dargestellter Mobilstationen. Der Demodulator 7 der Basisstation 1 bekommt entsprechend vom Codegenerator 9 alle Codeinformationen zugespielt und dekodiert mehrere Datenströme für mehrere Datennutzer 8. Es ist hier jedoch nicht mehr notwendig einen Kanalschätzer für die Dekodierung vorzusehen.

Das Verfahren mit dem die Übertragungseigenschaften aller Funkstrecken (ISI) und die Codes aller Funkstrecken (MAI) berücksichtigt werden, wird im folgenden durch mathematische Formeln beschrieben. Diese Formeln können entweder durch ein entsprechendes Programm oder entsprechende Hardwarebausteine, die diese Formeln implementieren realisiert werden.

## Patentansprüche

1. Verfahren für die Übertragung von Daten zwischen einer Basisstation (1) und mehreren Mobilstationen (2) über Funkkanäle (3), wobei die Daten unterschiedlicher Mobilstationen mit unterschiedlichen Codes gespreizt werden, wobei in einem Modulator (4) eine Vorentzerrung der zu übertragenden Signale vorgenommen wird, **dadurch gekennzeichnet, daß** bei der Vorentzerrung die Übertragungseigenschaften aller Funkkanäle (3) und alle unterschiedlichen Codes berücksichtigt werden.

2. Verfahren nach Anspruch 1, **dadurch gekennzeichnet, daß** Daten von einer Basisstation (1) zu einer Mehrzahl von Mobilstationen (2) übertragen werden.

3. Verfahren nach Anspruch 1, **dadurch gekennzeichnet, daß** Daten von einer Mehrzahl von Mobilstationen (2) zu einer Basisstation (1) übertragen werden.

4. Verfahren nach einem der vorhergehenden Ansprüche, **dadurch gekennzeichnet, daß** die Übertragungseigenschaften der Funkkanäle (3) aus Datenübertragungen von den Mobilstationen (2) zur Basisstation (1) durch die Basisstationen (1) ermittelt werden.

5. Vorrichtung für die Übertragung von Daten über mindestens einen Funkkanal, wobei die Vorrichtung in einem System verwendet wird, die eine Basisstation und mehrere Mobilstationen über Funkkanäle (3) verbindet, wobei die Daten unterschiedlicher Mobilstationen mit unterschiedlichen Codes gespreizt werden, wobei in einem Modulator (4) eine Vorentzerrung der zu übertragenden Signale vorgenommen wird, **dadurch gekennzeichnet, daß** ein Codegenerator (5), und ein Kanalschätzer (11) vorgesehen sind, die alle unterschiedlichen Codes und die Übertragungseigenschaften aller Funkkanäle (3) zur Verfügung stellen, und daß der Modulator (4) eine Vorentzerrung aufgrund der Informationen des Codegenerators (5) und des Kanalschätzers (11) vornimmt.

6. Vorrichtung nach Anspruch 5, **dadurch gekennzeichnet, daß** Daten von einer Basisstation (1) zu einer Mehrzahl von Mobilstationen (2) übertragen werden.

7. Vorrichtung nach Anspruch 5, **dadurch gekennzeichnet, daß** Daten von einer Mehrzahl von Mobilstationen (2) zu einer Basisstation (1) übertragen werden.

8. System für die Übertragung von Daten über mindestens einen Funkkanal (3), mit einer Basisstation und mehreren Mobilstationen, wobei die Daten unterschiedlicher Mobilstationen mit unterschiedlichen Codes gespreizt werden, wobei in einem Modulator (4) eine Vorentzerrung der zu übertragenden Signale vorgenommen wird, **dadurch gekennzeichnet, daß** ein Codegenerator (5), und ein Kanalschätzer (11) vorgesehen sind, die alle unterschiedlichen Codes und die Übertragungseigenschaften aller Funkkanäle (3) zur Verfügung stellen, und daß der Modulator (4) eine Vorentzerrung aufgrund der Informationen des Codegenerators (5) und des Kanalschätzers (11) vornimmt.

9. System nach Anspruch 8, **dadurch gekennzeichnet, daß** die Übertragungseigenschaften der Funkkanäle (3) aus Datenübertragungen von den Mobilstationen (2) zu den Basisstationen (1) durch die Basisstationen (1) ermittelt werden.

## Claims

1. Method for the transmission of data between a base station (1) and two or more mobile stations (2) via radio channels (3), with the data from different mobile stations being spread using different codes, and with the signals to be transmitted being predistorted in a modulator (4), **characterized in that** the predistortion process takes account of the transmission characteristics of all the radio channels (3) and the different codes.

2. Method according to Claim 1, **characterized in that** data from one base station (1) is transmitted to two or more mobile stations (2).

3. Method according to Claim 1, **characterized in that** data from two or more mobile stations (2) is transmitted to one base station (1).

4. Method according to one of the preceding claims, **characterized in that** the transmission characteristics of the radio channels (3) are determined by the base stations (1) from data transmissions from the mobile stations (2) to the base station (1).

5. Apparatus for the transmission of data via at least one radio channel, with the apparatus being used in a system which connects a base station and two or more mobile stations via radio channels (3), with the data from different mobile stations being spread using different codes, and with the signals to be transmitted being predistorted in a modulator (4), **characterized in that** a code generator (5) and a channel estimator (11) are provided, which make available all the different codes and the transmission characteristics of all the radio channels (3), and **in that** the modulator (4) carries out predistortion on the basis of the information from the code generator (5) and from the channel estimator (11).

6. Apparatus according to Claim 5, **characterized in that** data from one base station (1) is transmitted to two or more mobile stations (2).

7. Apparatus according to Claim 5, **characterized in that** data from two or more mobile stations (2) is transmitted to one base station (1).

8. System for the transmission of data via at least one radio channel (3), having a base station and having two or more mobile stations, with the data from different mobile stations being spread using different codes, and with the signals to be transmitted being predistorted in a modulator (4), **characterized in that** a code generator (5) and a channel estimator (11) are provided, which make available all the different codes and the transmission characteristics of all the radio channels (3), and **in that** the modulator (4) carries out predistortion on the basis of the information from the code generator (5) and from the channel estimator (11).

9. System according to Claim 8, **characterized in that** the transmission characteristics of the radio channels (3) are determined by the base stations (1) from data transmissions from the mobile stations (2) to the base stations (1).

## Revendications

1. Procédé de transmission de données entre une station de base (1) et plusieurs stations mobiles (2) par des canaux radio (3),
les données étant réparties avec des codes différents entre différentes stations mobiles,
un modulateur (4) assurant une pré-égalisation des signaux à transmettre,
**caractérisé en ce que**
la pré-égalisation tient compte des caractéristiques de transmission de tous les canaux radio (3) et de tous les codes différents.

2. Procédé selon la revendication 1,
**caractérisé en ce que**
les données sont transmises d'une station de base (1) à plusieurs stations mobiles (2).

3. Procédé selon la revendication 1,
**caractérisé en ce que**
les données sont transmises dans l'ensemble de stations mobiles (2) à une station de base (1).

4. Procédé selon l'une des revendications précédentes,
**caractérisé en ce que**
les caractéristiques de transmission des canaux radio (3) sont déterminées par la station de base (1)à partir des transmissions de données entre les stations mobiles (2) et la station de base (1).

5. Dispositif de transmission de données par au moins un canal radio selon lequel le dispositif est utilisé dans un système reliant une station de base et plusieurs stations mobiles par des canaux radio (3),
les données de différentes stations mobiles étant réparties avec des codes différents,
un modulateur (4) effectuant une pré-égalisation des signaux à transmettre,
**caractérisé par**
un générateur de code (5) et un évaluateur de canal (11) qui fournissent tous les codes différents et toutes les caractéristiques de transmission de tous les canaux radio (3) et
le modulateur (4) effectue une pré-égalisation à partir des informations du générateur de code (5) et de l'évaluateur de canal (11).

6. Dispositif selon la revendication 5,
**caractérisé en ce que**
les données sont transmises d'une station de base (1) à un ensemble de stations mobiles (2).

7. Dispositif selon la revendication 5,
**caractérisé en ce que**
les données sont transmises d'un ensemble de stations mobiles (2) vers une station de base (1).

8. Système de transmission de données par au moins un canal radio (3) comportant une station de base et plusieurs stations mobiles, les données de différentes stations mobiles étant réparties avec des codes différents,
un modulateur (4) effectuant une pré-égalisation des signaux à transmettre,
**caractérisé par**
un générateur de code (5) et un évaluateur de canal (11) qui fournissent tous les codes différents et les caractéristiques de transmission de tous les canaux radio (3) et
le modulateur (4) effectue une pré-égalisation à partir des informations du générateur de code (5) et l'évaluateur de canal (11).

9. Système selon la revendication 8,
**caractérisé en ce que**
les stations de base (1) déterminent les caractéristiques des canaux radio (3) à partir des transmissions de données des stations mobiles (2) vers les stations de base (1).
